# EUROPEAN PATENT APPLICATION

(11) **EP 3 845 462 A1**
(43) Date of publication of application: **07.07.2021**
(21) Application number: 20217780.4
(22) Date of filing: 30.12.2020
(51) Int. Cl.: B64D 37/32, A62C 3/08

(54) **FUEL TANK INERTING SYSTEM AND METHOD**

(30) Priority: 03.01.2020 US 202016734006
(71) Applicant: Hamilton Sundstrand Corporation, Charlotte, NC 28217-4578 (US)
(72) Inventor: DARDAS, Zissis A., Worcester, MA 01602 (US); EMERSON, Sean C., Broad Brook, CT 06016 (US); SHE, Ying, East Hartford, 06118 (US); RANJAN, Rajiv, South Windsor, CT 06074 (US); CORDATOS, Haralambos, Colchesster, CT 06415 (US); PEARSON, Matthew Robert, Hartford, CT 06103 (US); SURAWSKI, Eric, Hebron, CT 06248 (US)
(74) Representative: Dehns

(57) **Abstract**

A system is disclosed for inerting a fuel tank. The system includes a fuel tank (202) and an air separator (404) including a membrane with a permeability differential between oxygen and nitrogen, an air inlet and an inert gas outlet in fluid communication with a first side of the membrane, and a sweep gas inlet and an oxygen-enriched gas outlet in fluid communication with a second side of the membrane. An inert gas flow path is arranged to receive inert gas from the air separation module oxygen-depleted air outlet, and to direct inert gas to the fuel tank. A catalytic reactor is arranged to receive a fuel and air, and configured to catalytically react the fuel and oxygen in the air to form an oxygen-depleted gas, and to discharge the oxygen-depleted gas from a reactor outlet. A sweep gas flow path from the reactor outlet to the air separator sweep gas inlet.

## Description

### BACKGROUND

The subject matter disclosed herein generally relates to systems for generating and providing inert gas, oxygen, and/or power on aircraft, and more specifically to fluid flow operation of such systems.

It is recognized that fuel vapors within fuel tanks become combustible or explosive in the presence of oxygen. An inerting system decreases the probability of combustion or explosion of flammable materials in a fuel tank by maintaining a chemically non-reactive or inert gas, such as nitrogen-enriched air, in the fuel tank vapor space, also known as ullage. Three elements are required to initiate combustion or an explosion: an ignition source (e.g., heat), fuel, and oxygen. The oxidation of fuel may be prevented by reducing any one of these three elements. If the presence of an ignition source cannot be prevented within a fuel tank, then the tank may be made inert by: 1) reducing the oxygen concentration, 2) reducing the fuel concentration of the ullage to below the lower explosive limit (LEL), or 3) increasing the fuel concentration to above the upper explosive limit (UEL). Many systems reduce the risk of oxidation of fuel by reducing the oxygen concentration or by introducing an inert gas such as nitrogen-enriched air (NEA) (i.e., oxygen-depleted air or ODA) to the ullage, thereby displacing oxygen with a nitrogen or other inert gases at target thresholds for avoiding explosion or combustion.

It is known in the art to equip vehicles (e.g., aircraft, military vehicles, etc.) with onboard inert gas generating systems, which supply an inert gas to the vapor space (i.e., ullage) within the fuel tank. Various systems have been used or proposed for generating inert gas onboard an aircraft, and each system imposes its own fuel consumption burden vehicle based on various criteria including but not limited to the consumption of compressed air, consumption of electricity, demand for ram air, payload of system components, and combinations including any of the foregoing. Each of the systems that have been used or proposed has its own potential advantages and disadvantages, and there continues to be a demand for technical solutions for the provision of inert gas onboard aircraft.

### BRIEF DESCRIPTION

A system is disclosed for inerting a fuel tank. The system includes a fuel tank and an air separator including a membrane with a permeability differential between oxygen and nitrogen, an air inlet and an inert gas outlet in fluid communication with a first side of the membrane, and a sweep gas inlet and an oxygen-enriched gas outlet in fluid communication with a second side of the membrane. An inert gas flow path is arranged to receive inert gas from the air separation module oxygen-depleted air outlet, and to direct inert gas to the fuel tank. A catalytic reactor is arranged to receive a fuel and air, and configured to catalytically react the fuel and oxygen in the air to form an oxygen-depleted gas, and to discharge the oxygen-depleted gas from a reactor outlet. A sweep gas flow path from the reactor outlet to the air separator sweep gas inlet.

In some aspects, the system can further include a cooler arranged to cool inert gas generated by the catalytic reactor.

In addition to, or as an alternative to, any one or combination of the above features, the system can further include an air flow path from a compressed air source to an inlet of the air separator.

In addition to, or as an alternative to, any one or combination of the above features, the air flow path can be between an aircraft engine compressor section and the inlet of the air separator.

In addition to, or as an alternative to, any one or combination of the above features, the catalytic reactor, or an air source for the catalytic reactor, or an oxygen-depleted gas flow path from the catalytic reactor to the sweep gas inlet, or any combination of the foregoing can be configured to provide a pressure at the sweep gas inlet that is above a pressure at the oxygen-enriched gas outlet and below a pressure on the first side of the air separator membrane.

In addition to, or as an alternative to, any one or combination of the above features, the sweep gas inlet and the oxygen-enriched gas outlet can be arranged to provide co-flow with air flow on the first side of the air separator membrane.

In addition to, or as an alternative to, any one or combination of the above features, the sweep gas inlet and the oxygen-enriched gas outlet can be arranged to provide counter-flow with air flow on the first side of the air separator membrane.

In addition to, or as an alternative to, any one or combination of the above features, the sweep gas inlet and the oxygen-enriched gas outlet can be arranged to provide cross-flow with air flow on the first side of the air separator membrane.

Also disclosed is a method of operating a system including any one or combination of the above features. According to the method, air is directed to the air separator air inlet, and oxygen is transported air on the first side of the air separator membrane to the second side of the air separator membrane to form an inert gas on the first side of the air separator membrane and an oxygen-enriched gas on the second side of the membrane. The oxygen-enriched gas is outputted from the air separator oxygen-enriched gas outlet, and the inert gas is directed from the air separator inert gas outlet to the fuel tank. Fuel is reacted with oxygen in air in the catalytic reactor to produce an oxygen-depleted gas, and the oxygen-depleted gas is directed from the catalytic reactor to the air separator sweep gas inlet.

In some aspects, the method can include reacting the fuel with oxygen in the catalytic reactor to produce oxygen-depleted gas continuously throughout operation of the membrane separator.

In addition to, or as an alternative to, any one or combination of the above features, fuel can be reacted with oxygen in the catalytic reactor to produce oxygen-depleted gas in response to a demand for inert gas.

Also disclosed is a method of producing an inert gas. According to the method, air is separated through a membrane with a permeability differential between oxygen and nitrogen to produce the inert gas on a first side of the membrane and oxygen-enriched air on a second side of the membrane. Fuel is catalytically reacting with oxygen to produce an oxygen-depleted gas, and the oxygen-depleted gas is directed as a sweep gas to the second side of the membrane.

In some aspects, a method of inerting a fuel tank can include separating air through a membrane with a permeability differential between oxygen and nitrogen to produce an inert gas on a first side of the membrane and oxygen-enriched air on a second side of the membrane, reacting fuel with oxygen to produce an oxygen-depleted gas, and directing the oxygen-depleted gas as a sweep gas to the second side of the membrane, and directing the inert gas to the fuel tank.

In some aspects of the method of inerting a fuel tank, fuel is reacted with oxygen to produce oxygen-depleted gas continuously throughout separation of air through the membrane.

In addition to, or as an alternative to, any one or combination of the above features, the method of inerting a fuel tank can include reaction of fuel with oxygen to produce oxygen-depleted gas in response to a demand for inert gas.

### BRIEF DESCRIPTION OF THE DRAWINGS

The following descriptions should not be considered limiting in any way. With reference to the accompanying drawings, like elements are numbered alike:
FIGS. 1A and 1B are schematic illustrations of different views of an aircraft;
FIG. 2 is a schematic illustration of a membrane air separator;
FIG. 3 is a schematic illustration of a portion of a fuel tank inerting system including a catalytic reactor in accordance with an embodiment of the disclosure; and
FIG. 4 is a schematic illustration of a fuel tank inerting system including an air separator and a catalytic reactor in accordance with an example embodiment of the disclosure.

### DETAILED DESCRIPTION

A detailed description of one or more embodiments of the disclosed apparatus and method are presented herein by way of exemplification and not limitation with reference to the Figures.

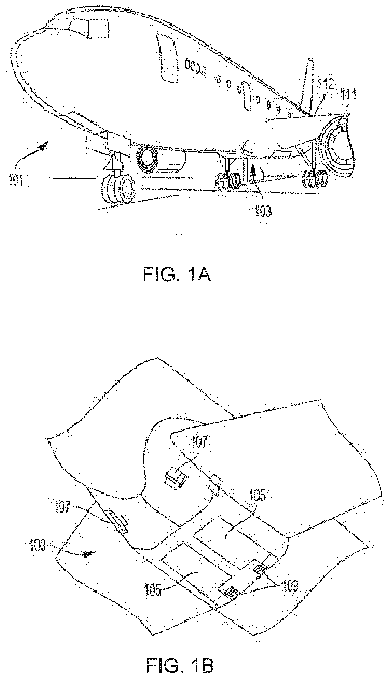

FIGS. 1A-1B are schematic illustrations of an aircraft 101 that can employ one or more embodiments of the present disclosure. As shown in FIGS. 1A-1B, the aircraft 101 includes bays 103 beneath a center wing box. The bays 103 can contain and/or support one or more components of the aircraft 101. For example, in some configurations, the aircraft 101 can include environmental control systems and/or fuel inerting systems within the bay 103. As shown in FIG. 1B, the bay 103 includes bay doors 105 that enable installation and access to one or more components (e.g., environmental control systems, fuel tank inerting systems, etc.). During operation of environmental control systems and/or fuel tank inerting systems of the aircraft 101, air that is external to the aircraft 101 can flow into one or more environmental control systems within the bay doors 105 through one or more ram air inlets 107. The air may then flow through the environmental control systems to be processed and supplied to various components or locations within the aircraft 101 (e.g., passenger cabin, fuel inerting systems, etc.). Some air may be exhausted through one or more ram air exhaust outlets 109.

Also shown in FIG. 1A, the aircraft 101 includes one or more engines 111. The engines 111 are typically mounted on wings of the aircraft 101, but may be located at other locations depending on the specific aircraft configuration. In some aircraft configurations, air can be bled from the engines 111 and supplied to environmental control systems and/or fuel tank inerting systems, as will be appreciated by those of skill in the art.

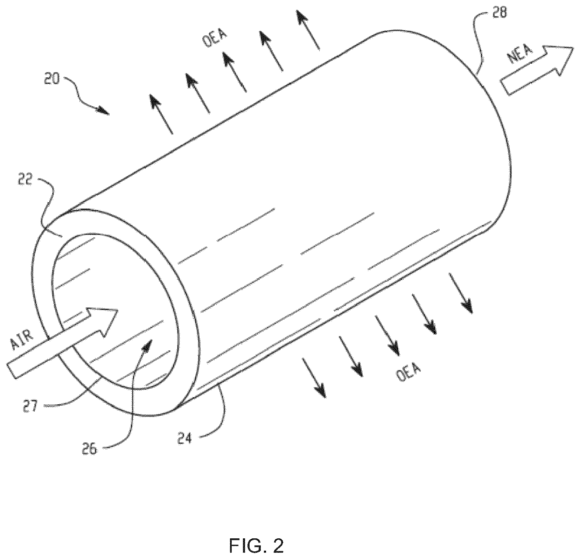

Aspects of the function of fuel tank flammability reduction systems in accordance with embodiments of the present disclosure can be accomplished by separating oxygen from nitrogen in air utilizing a membrane with a permeability differential between oxygen and nitrogen. An example embodiment of a membrane separator is shown in FIG. 2. FIG. 2 depicts a tubular membrane, but other configurations such as planar membranes can also be used. As shown in Fig. 2, a tubular membrane 20 comprises a tubular shell 22. The membrane 20 can be fabricated from a material that has selective permeability to oxygen compared to nitrogen such that a pressure differential across the membrane provided by a gas comprising nitrogen and oxygen on the high-pressure side of the membrane will preferentially diffuse oxygen molecules across the membrane. For ease of illustration, the membrane 20 is depicted as a monolithic hollow shell, and membranes fabricated solely out of the selective oxygen-permeable membrane material are included within the scope of this invention. However, in many cases, the membrane is a composite of a substrate or layer that is permeable to both oxygen and nitrogen and a substrate or layer that is selectively permeable to oxygen.

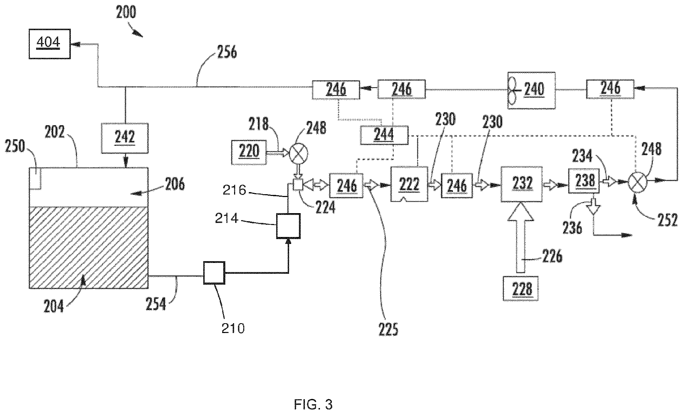

The shell 22 defines a hollow core 26 that is open at both ends. In use, pressurized gas comprising nitrogen and oxygen (e.g., air which is known to also contain trace amounts of noble/inert gases) is delivered into the hollow core 26 at an inlet end 27 of the membrane 20. The pressure of the air is greater than air outside the core 26 such that a pressure differential between the hollow core 26 and air at the exterior 24 of the membrane 20 exists. Oxygen molecules preferentially diffuse through the tubular membrane 20 compared to nitrogen molecules, resulting in a flow of oxygen-enriched air (OEA) from the outer surface of the tubular membrane 20 as shown in FIG. 3, and a flow of nitrogen-enriched air (NEA) from the hollow core 26 at the outlet end 28 of the membrane 20 as shown in FIG. 2. An alternative mode of operation for the membrane is to maintain equal or nearly equal pressure on each side, but utilize a carrier gas (sweep gas) on the back side of the membrane such that the partial pressure of the gas to be removed is always higher on the top side of the membrane, thereby providing the driving force for separation. The membrane 20 can be formed from different materials, including but not limited to polymers (e.g., polyimides, polysulfones, polyketones (e.g., PEEK), polycarbonates) including polymers of intrinsic microporosity ("PIM") (e.g., polybenzodioxanes) and thermally-rearranged ("TR") polymers (e.g., thermally-rearranged polybenzoxazoles), or refractory ceramics (e.g., zeolite).

As mentioned above, a catalytic reactor can be utilized to produce an oxygen-depleted gas as a sweep gas for a membrane air separator. Such a reactor performs catalytic reaction of a fuel (e.g., a "first reactant") with a source of gas containing oxygen such as air (e.g., a "second reactant"). The product of the reaction is carbon dioxide and water vapor. The source of the second reactant (e.g., air) can be bleed air or any other source of air containing oxygen, including, but not limited to, high-pressure sources (e.g., engine), bleed air, cabin air, etc. A catalyst material such as a noble metal catalyst is used to catalyze the chemical reaction. The conversion of oxygen in the air feed to carbon dioxide and water via the catalytic reaction produces an oxygen-depleted gas.

The catalytic chemical reaction between fuel and air also generates water. Water in the fuel tank can be undesirable. Thus, in accordance with embodiments of the present disclosure, the water from a product gas stream (e.g., exiting the catalyst) can be removed through various mechanisms, including, but not limited to, condensation. The product gas stream can be directed to enter a heat exchanger downstream from the catalyst that is used to cool the product gas stream such that the water vapor condenses out of the product gas stream. The liquid water can then be drained overboard. In some embodiments, an optional water separator can be used to augment or provide water separation from the product stream.

Aircraft fuel tanks are typically vented to ambient pressure. At altitude, pressure inside the fuel tank is very low and is roughly equal to ambient pressure. However, during descent, the pressure inside the fuel tank needs to rise to equal ambient pressure at sea level (or at whatever altitude the aircraft is landing). This change in pressure requires gas entering the tank from outside to equalize with the pressure in the tank. Outside air entering the fuel tank can provide oxygen for combustion of the fuel, and the systems disclosed herein can provide an inert gas to the fuel tank to help reduce the risk of combustion.

FIG. 3 is a schematic illustration of a flammability reduction or inerting system portion 200 utilizing a catalytic reaction between first and second reactants to produce inert gas in accordance with an embodiment of the present disclosure. The inerting system portion 200, as shown, includes a fuel tank 202 having fuel 204 therein. As the fuel 204 is consumed during operation of one or more engines, an ullage space 206 forms within the fuel tank 202. To reduce flammability risks associated with vaporized fuel that may form within the ullage space 206, an inert gas can be generated and fed into the ullage space 206.

The inerting system portion 200 utilizes the catalytic reactor 222 to catalyze a chemical reaction between oxygen (second reactant 218) and fuel (first reactant 216) to produce carbon dioxide-containing for the inert gas (inert gas 234) and water in vapor phase (byproduct 236). The source of the second reactant 218 (e.g., oxygen) used in the reaction can come from any source on the aircraft that is at a pressure greater than ambient, including but not limited to bleed air from an engine, cabin air, high pressure air extracted or bled from an engine, etc. (i.e., any second reactant source 220 can take any number of configurations and/or arrangements), and as disclosed in more detail hereinbelow includes a membrane air separator. Even non-air oxygen sources can be used, and "air" is used herein as a short-hand term for any oxygen-containing gas. The fuel (first reactant 216) is provided by pressurizing fuel 204 from the fuel tank 202 with a pump 210 and atomizing it in an injector 214. The atomized fuel (first reactant 216) from the injector 214 can be mixed with second reactant 218 in a mixing zone 224 and delivered to the catalytic reactor 222 as shown in FIG. 3, or the reactants 216, 218 can each be directly delivered to the reactor.

With continued reference to FIG. 3, the mixed reactant stream 225 (e.g., fuel and oxygen or air) is then introduced to the catalytic reactor 222, catalyzing a chemical reaction that transforms the mixed reactant stream 225 (e.g., fuel and air) into the inert gas 234 and the byproduct 236 (e.g., water vapor). It is noted that any inert gas species that are present in the mixed reactant stream 225 (for example, nitrogen from the air) will not react and will thus pass through the catalytic reactor 222 unchanged. In some aspects (not shown), the catalytic reactor 222 can be include heat exchange components for rejection of heat from the catalytic reactor 222 to a heat sink.

The catalytic reactor 222 can be temperature controlled to ensure a desired chemical reaction efficiency such that an inert gas can be efficiently produced by the inerting system portion 200 from the mixed reactant stream 225. Accordingly, cooling air 226 can be provided to extract heat from the catalytic reactor 222 to achieve a desired thermal condition for the chemical reaction within the catalytic reactor 222. The cooling air 226 can be sourced from a cool air source 228. A catalyzed mixture 230 leaves the catalytic reactor 222 and is passed through a heat exchanger 232. The heat exchanger 232 operates as a condenser on the catalyzed mixture 230 to separate out an inert gas 234 and a byproduct 236 (e.g., water). A cooling air is supplied into the heat exchanger 232 to achieve the condensing functionality. In some embodiments, as shown, a cooling air 226 can be sourced from the same cool air source 228 as that provided to the catalytic reactor 222, although in other embodiments the cool air sources for the two components may be different. The byproduct 236 may be water vapor, and thus in the present configuration shown in FIG. 3, an optional water separator 238 is provided downstream of the heat exchanger 232 to extract the water from the catalyzed mixture 230, thus leaving only the inert gas 234 to be provided to the ullage space 206 of the fuel tank 202. In some embodiments, the inerting system portion 200 can supply inert gas to multiple fuel tanks on an aircraft. After the inert gas 234 is generated, the inert gas 234 will flow through a fuel tank supply line 256 to supply the inert gas 234 to the fuel tank 202 and, optionally, additional fuel tanks 258.

A flow control valve 248 located downstream of the heat exchanger 232 and optional water separator 238 can meter the flow of the inert gas 234 to a desired flow rate. An optional boost fan 240 can be used to boost the gas stream pressure of the inert gas 234 to overcome a pressure drop associated with ducting between the outlet of the heat exchanger 232 and the discharge of the inert gas 234 into the fuel tank 202. The flame arrestor 242 at an inlet to the fuel tank 202 is arranged to prevent any potential flames from propagating into the fuel tank 202.

Typically, independent of any aircraft flammability reduction system(s), aircraft fuel tanks (e.g., fuel tank 202) need to be vented to ambient pressure. Thus, as shown in FIG. 2, the fuel tank 202 includes a vent 250. At altitude, pressure inside the fuel tank 202 is very low and is roughly equal to ambient pressure. During descent, however, the pressure inside the fuel tank 202 needs to rise to equal ambient pressure at sea level (or whatever altitude the aircraft is landing at). This requires gas entering the fuel tank 202 from outside to equalize with the pressure in the tank. When air from outside enters the fuel tank 202, water vapor can be carried by the ambient air into the fuel tank 202. To prevent water/water vapor from entering the fuel tank 202, the inerting system portion 200 can repressurize the fuel tank 202 with the inert gas 234 generated by the inerting system portion 200. This can be accomplished by using the valves 248. For example, one of the valves 248 may be a flow control valve 252 that is arranged fluidly downstream from the catalytic reactor 222. The flow control valve 252 can be used to control the flow of inert gas 234 into the fuel tank 202 such that a slightly positive pressure is always maintained in the fuel tank 202. Such positive pressure can prevent ambient air from entering the fuel tank 202 from outside during descent and therefore prevent water from entering the fuel tank 202.

A controller 244 can be operably connected to the various components of the inerting system portion 200, including, but not limited to, the valves 248 and the sensors 246. The controller 244 can be configured to receive input from the sensors 246 to control the valves 248 and thus maintain appropriate levels of inert gas 234 within the ullage space 206. Further, the controller 244 can be arranged to ensure an appropriate amount of pressure within the fuel tank 202 such that, during a descent of an aircraft, ambient air does not enter the ullage space 206 of the fuel tank 202.

The catalytic reactor 222 can be temperature controlled to ensure a desired chemical reaction efficiency such that an inert gas can be efficiently produced by the inerting system portion 200 from the mixed reactant stream 225. Accordingly, cooling air 226 can be provided to extract heat from the catalytic reactor 222 to achieve a desired thermal condition for the chemical reaction within the catalytic reactor 222. The cooling air 226 can be sourced from a cool air source 228. A catalyzed mixture 230 leaves the catalytic reactor 222 and is passed through a heat exchanger 232. The heat exchanger 232 operates as a condenser on the catalyzed mixture 230 to separate out an inert gas 234 and a byproduct 236 (e.g., water). A cooling air is supplied into the heat exchanger 232 to achieve the condensing functionality. In some embodiments, as shown, a cooling air 226 can be sourced from the same cool air source 228 as that provided to the catalytic reactor 222, although in other embodiments the cool air sources for the two components may be different. The byproduct 236 may be water vapor, and thus in the present configuration shown in FIG. 3, an optional water separator 238 is provided downstream of the heat exchanger 232 to extract the water from the catalyzed mixture 230, thus leaving only the oxygen-depleted gas 234 to be provided as a sweep gas to a membrane separator module 404 through flow path 256.

A flow control valve 248 located downstream of the heat exchanger 232 and optional water separator 238 can meter the flow of the inert gas 234 to a desired flow rate. An optional boost fan 240 can be used to boost the gas stream pressure of the inert gas 234 to overcome a pressure drop associated with ducting between the outlet of the heat exchanger 232 and the discharge of the inert gas 234 into the fuel tank 202. The flame arrestor 242 at an inlet to the fuel tank 202 is arranged to prevent any potential flames from propagating into the fuel tank 202.

Typically, independent of any aircraft flammability reduction system(s), aircraft fuel tanks (e.g., fuel tank 202) need to be vented to ambient pressure. Thus, as shown in FIG. 3, the fuel tank 202 includes a vent 250. At altitude, pressure inside the fuel tank 202 is very low and is roughly equal to ambient pressure. During descent, however, the pressure inside the fuel tank 202 needs to rise to equal ambient pressure at sea level (or whatever altitude the aircraft is landing at). This requires gas entering the fuel tank 202 from outside to equalize with the pressure in the tank. When air from outside enters the fuel tank 202, water vapor can be carried by the ambient air into the fuel tank 202. To prevent water/water vapor from entering the fuel tank 202, the inerting system portion 200 can repressurize the fuel tank 202 with the inert gas 234 generated by the inerting system portion 200. This is accomplished by using the valves 248. For example, one of the valves 248 may be a flow control valve 252 that is arranged fluidly downstream from the catalytic reactor 222. The flow control valve 252 can be used to control the flow of inert gas 234 into the fuel tank 202 such that a slightly positive pressure is always maintained in the fuel tank 202. Such positive pressure can prevent ambient air from entering the fuel tank 202 from outside during descent and therefore prevent water from entering the fuel tank 202.

A controller 244 can be operably connected to the various components of the inerting system portion 200, including, but not limited to, the valves 248 and the sensors 246. The controller 244 can be configured to receive input from the sensors 246 to control the valves 248 and thus maintain appropriate levels of inert gas 234 within the ullage space 206. Further, the controller 244 can be arranged to ensure an appropriate amount of pressure within the fuel tank 202 such that, during a descent of an aircraft, ambient air does not enter the ullage space 206 of the fuel tank 202.

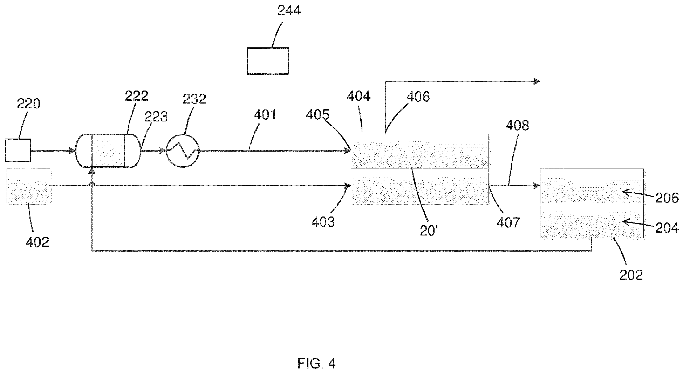

An example embodiment of an inert gas generating system 400 including a membrane separator and a catalytic reactor is schematically shown in FIG. 4. Fluid flows between the components in FIG. 4 through the arrowed lines that are described contextually below unless explicitly identified and numbered. As shown in FIG. 4, air from an air source 402 (which can be the same as or different from an air source use as a second reactant source 220) is directed first to an inlet 403 of the membrane separator module 404 with membrane 20' that can be formed from bundles of tubular membranes such as shown in FIG. 3. The air source 402 can include any source on the aircraft that is at a pressure greater than ambient, including but not limited to bleed air from an engine, cabin air, high pressure air extracted or bled from an engine, etc. Other components (not shown) can be disposed along the air flow path 403 between the air source 402 and the membrane separator module inlet 403. For example, in the case of a gas turbine engine compressor section air source, the hot compressed air can be directed to a heat rejection side of a heat exchanger to be cooled to a temperature suitable for the membrane. Other components can also be included upstream of the membrane separator module 404, including but not limited to one or more filter components, including but not limited to a particulate filter (e.g., a HEPA filter) for removal of particulates, or a coalescing filter for removal of liquid entrained in the air flow. In the case of multiple filter components, they can be integrated into a single module or can be disposed in separate modules (not shown) on the air flow path. Other air treatment modules can be included upstream of the membrane separator module 404, including but not limited to catalytic treatment modules such as for ozone removal.

With continued reference to FIG. 4, air from the air source 402 is transported from a first side of the membrane 20' across the membrane to produce an oxygen-enriched gas on a second side of the membrane 20', which is discharged from oxygen-enriched gas outlet 406, from where it can be exhausted off-board or can be directed to an on-board system for further utilization. A sweep gas in the form of oxygen-depleted gas from an outlet 223 of the catalytic reactor 222 is directed along a sweep gas flow path 401, and introduced to the second side of the membrane 20' through a sweep gas inlet 405. Oxygen-depleted air discharged from is directed from an outlet 407 of the membrane separator module 404 along an inert gas flow path 408 to the ullage space 206 of fuel tank 202. In some aspects, the sweep gas inlet 405 and the outlet 406 can be arranged to provide co-flow of the sweep gas (left to right in FIG. 4) with respect to a direction of flow of gas on the first side of the membrane 20'. In some aspects, the sweep gas inlet 405 and the outlet 406 can be arranged to provide counter-flow of the sweep gas (right to left in FIG. 4) with respect to a direction of flow on the first side of the membrane 20'. In some aspects, the sweep gas inlet 405 and the outlet 406 can be arranged to provide cross-flow of the sweep gas (bottom to top in FIG. 4) with respect to a direction of flow on the first side of the membrane 20'.

In operation, aircraft fuel tanks are typically vented to ambient pressure. At altitude, pressure inside the fuel tank is very low and is roughly equal to ambient pressure. However, during descent, the pressure inside the fuel tank needs to rise to equal ambient pressure at sea level (or at whatever altitude the aircraft is landing). This change in pressure requires gas entering the tank from outside to equalize with the pressure in the tank. Outside air entering the fuel tank can provide oxygen for combustion of the fuel, and the systems disclosed herein can provide an inert gas to the fuel tank to help reduce the risk of combustion.

The system 400 or variants on the system 400 can be operated in different modes of operation. For example, in some aspects, the flow of sweep gas from the catalytic reactor 222 can be adjusted by the controller 244 in response to a demand for inert gas, with higher flow rates of or lower oxygen levels of the sweep gas provided in response to higher levels of demand for inert gas. During aircraft descent, the system demand for inert gas can be relatively high because increasing outside atmospheric pressure tends to force outside air into the fuel tank through the vent system, and a greater volume of inert gas is needed in order to displace outside air or prevent inflow of outside air. However, under other operating conditions such as cruise or aircraft ascent, the system demand for inert gas can be relatively low since only the volume from fuel consumption must be replaced as there is no pressure-driven inflow of outside air.

In some aspects, the above-described system configuration and modes of operation can provide a technical effect of promoting more effective separation of oxygen from nitrogen by a membrane due to the effect of lower partial pressure of oxygen in the sweep gas providing a greater differential in oxygen pressure across the membrane. This can reduce or eliminate the need for pressurized air such as bleed air from the engine as an air source for the membrane separator 404. For example, one could use cabin air exhaust (which is in plentiful supply) in conjunction with an electrically driven blower, thereby reducing fuel burn consumption. Additional benefits can also be achieved, such as reduction in membrane size (e.g., shorter length tubular membranes) and design capacity reductions of the air separator 404 compared to prior systems that use only membrane separators. The catalytic reactor 222 and its associated components can also be sized smaller compared to prior proposed systems that use only catalytic reaction of fuel to produce inert gas, and can achieve significantly reduced fuel consumption compared to systems that catalytic reactor systems that would operate throughout flight operations.

As discussed in various aspects above and shown in FIGS. 3 and 4, the systems disclosed herein can include a controller 244. The controller 244 can be in operative communication with the air separator 404, the catalytic reactor 222, and any associated valves, pumps, compressors, conduits, ejectors, pressure regulators, or other fluid flow components, and with switches, sensors, and other electrical system components, and any other system components to operate the inert gas system. These control connections can be through wired electrical signal connections (not shown) or through wireless connections. In some embodiments, the controller 244 can be configured to operate the system according to specified parameters, as discussed in greater detail further above. The controller can be an independent controller dedicated to controlling the inert gas generating system, or can interact with other onboard system controllers or with a master controller. In some embodiments, data provided by or to the controller 244 can come directly from a master controller.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an", "the", or "any" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A fuel tank inerting system for an aircraft, comprising:
a fuel tank (202);
an air separator (404) comprising a membrane with a permeability differential between oxygen and nitrogen, an air inlet and an inert gas outlet in fluid communication with a first side of the membrane, and a sweep gas inlet and an oxygen-enriched gas outlet in fluid communication with a second side of the membrane;
an inert gas flow path (408) arranged to receive inert gas from the air separation module oxygen-depleted air outlet, and to direct inert gas to the fuel tank;
a catalytic reactor (222) arranged to receive a fuel and air, and configured to catalytically react the fuel and oxygen in the air to form an oxygen-depleted gas, and to discharge the oxygen-depleted gas from a reactor outlet; and
a sweep gas flow path from the reactor outlet to the air separator sweep gas inlet.

2. The system of claim 1, further comprising a cooler arranged to cool inert gas generated by the catalytic reactor.

3. The system of claim 1 or 2, further comprising an air flow path from a compressed air source to an inlet of the air separator.

4. The system of claim 3, wherein the air flow path is between an aircraft engine compressor section and the inlet of the air separator.

5. The system of any preceding claim, wherein the catalytic reactor, or an air source for the catalytic reactor, or an oxygen-depleted gas flow path from the catalytic reactor to the sweep gas inlet, or any combination of the foregoing are configured to provide a pressure at the sweep gas inlet that is above a pressure at the oxygen-enriched gas outlet and below a pressure on the first side of the air separator membrane.

6. The system of any preceding claim, wherein the sweep gas inlet and the oxygen-enriched gas outlet are arranged to provide co-flow with air flow on the first side of the air separator membrane.

7. The system of any of claims 1 to 5, wherein the sweep gas inlet and the oxygen-enriched gas outlet are arranged to provide counter-flow with air flow on the first side of the air separator membrane.

8. The system of any of claims 1 to 5, wherein the sweep gas inlet and the oxygen-enriched gas outlet are arranged to provide cross-flow with air flow on the first side of the air separator membrane.

9. A method of operating the system of any preceding claim, comprising:
directing air to the air separator air inlet;
transporting oxygen from air on the first side of the air separator membrane to the second side of the air separator membrane to form an inert gas on the first side of the air separator membrane and an oxygen-enriched gas on the second side of the membrane;
directing inert gas from the air separator inert gas outlet to the fuel tank;
reacting fuel with oxygen in air in the catalytic reactor to produce an oxygen-depleted gas, and directing the oxygen-depleted gas from the catalytic reactor to the air separator sweep gas inlet; and
outputting oxygen-enriched gas from the air separator oxygen-enriched gas outlet.

10. The method of claim 9, wherein fuel is reacted with oxygen in the catalytic reactor to produce oxygen-depleted gas continuously throughout operation of the membrane separator.

11. The method of claim 9, wherein fuel is reacted with oxygen in the catalytic reactor to produce oxygen-depleted gas in response to a demand for inert gas.

12. A method of producing an inert gas, comprising.
separating air through a membrane with a permeability differential between oxygen and nitrogen to produce the inert gas on a first side of the membrane and oxygen-enriched air on a second side of the membrane;
catalytically reacting a fuel with oxygen to produce an oxygen-depleted gas; and
directing the oxygen-depleted gas as a sweep gas to the second side of the membrane.

13. A method of inerting a fuel tank, comprising producing an inert gas according to the method of claim 12, and directing the inert gas to the fuel tank.

14. The method of claim 13, wherein fuel is reacted with oxygen to produce oxygen-depleted gas continuously throughout separation of air through the membrane.

15. The method of claim 13, wherein fuel is reacted with oxygen to produce oxygen-depleted gas in response to a demand for inert gas.
